# EUROPEAN PATENT SPECIFICATION

(11) **EP 3 585 583 B1**
(45) Date of publication and mention of the grant of the patent: **22.12.2021**
(21) Application number: 18709785.2
(22) Date of filing: 20.02.2018
(51) Int. Cl.: B29C 45/16, B29C 45/17, G10K 11/00, B29K 23/00, B29K 75/00, B29K 77/00, B29K 105/04, B29C 44/08, B29C 44/12, G10K 11/168

(54) **MULTI-STEP METHOD FOR PRODUCING A SOUNDPROOF COMPOSITE COVER FOR INTERNAL COMBUSTION ENGINES**
MULTI-STEP-VERFAHREN ZUR HERSTELLUNG EINER SCHALLDICHTEN VERBUNDABDECKUNG FÜR INNERE VERBRENNUNGSMOTOREN
PROCÉDÉ À PLUSIEURS ÉTAPES POUR PRODUIRE UN COUVERCLE COMPOSITE INSONORISÉ POUR DES MOTEURS À COMBUSTION INTERNE

(30) Priority: 22.02.2017 IT 201700019731
(43) Date of publication of application: 01.01.2020
(73) Proprietor: Sapa S.P.A., 80121 Napoli (IT)
(72) Inventor: AFFINITA, Antonio, I-80121 Napoli (NA) (IT)
(74) Representative: Fiammenghi, Eva
(86) International application number: PCT/IB2018/051022
(87) International publication number: WO 2018/154432

(56) References cited:
- EP-A2- 2 644 350
- WO-A1-2010/032688
- GB-A- 2 426 954

## Description

### Field of the art

The present invention operates in the field of mechanics and the automobile industry. More in detail the present invention regards a new and innovative process for producing the composite cover of engines due to a particular multiple mold and to the method of use thereof.

### Prior art

The automobile industry is the branch of the manufacturing industry involved with the design, construction, marketing and sales of motor vehicles. After 2008 and 2009, when this was the industrial sector most hit by the economic and financial crisis, such field has since once again found momentum, with a growth greater than 25% in 2010. In 2011 nearly 80 million motor vehicles, which include cars and commercial vehicles, were produced throughout the world, making this the number one manufacturing field in the world for turnover.

This data suffices to explain the great variety of vehicles present on the market today; vehicles ranging from campers to commercial vans, utility vehicles and sports cars. However, all these vehicles ― regardless of the purpose for which they were designed ― today pursue the object of lowering pollutant emissions.

Indeed, most of the automobile industry research is now aimed to find solutions in order to respect international agreements and national laws on pollution, which provide for admissible CO₂ percentages that have been increasingly lower over the years. Such lowering of the emissions can be reached in two ways: the first is to optimize the operation of the engines which, at least at present, does not seem to give results sufficient for respecting regulations; the second is to reduce the weight of the vehicle and hence of each component thereof.

A first object of the present invention, in order to contribute to the reduction of the vehicle emissions, is that of producing plastic components for vehicles with thickness, and consequently also weight, considerably lower than that produced up to now.

More in particular, the reduction of thickness and weight reached by means of the present patent is applied to the engine cover, a component which also requires a foam portion that provides thermal and acoustic insulation.

A second object of the invention, described in detail hereinbelow, is that of optimizing the process for producing such components.

Currently, one proceeds by making the desired form of thermoplastic material, awaiting the time for cooling the material, typically about 3 minutes, proceeding with the injection of a foam that expands within a suitable mold and, finally, extracting the product from the second mold and finishing by eliminating the excess foam that flows out from the pre-established shape.

There are several international patents aimed for optimizing the production process for the various automobile components, such as the recent Chinese patent CN105689560 A. This describes a system of molds for producing the engine cover and the hood of a car but there are no references to the insulating parts made of foam or the like that constitute an integral and essential part of the industrial process.

EP2644350A2 discloses a production method using a continuous extrusion-injection-foaming process, and more specifically relates to a method for producing a splash shield. In the production method for a splash shield according to EP2644350A2, a single process is used for the procedure to reduce the risk of molding dimension errors and of denaturing and contamination in the conveying procedure.

GB2426954A claims a bolster with a soft feel for use in a trim assembly that includes a substrate formed by co-injecting a first and second material into a first shot mold cavity of a mold assembly in a first shot of a molding operation. In a second shot mold cavity, a cover is formed on at least a portion of the substrate by co-injecting into a mold chamber a third and fourth material in a second shot of the molding operation. The fourth material defines an outer skin surrounding the third material which may include a foamed material to provide a soft, light cellular inner core such that when a force is applied to the cover, the outer skin will deform and compress the inner core, providing a soft feel to the bolster.

Due to the present invention, all the steps currently necessary for producing the cover of the engine are unified and optimized, having as a result a much quicker and less expensive production process that uses a multiple mold, described hereinbelow.

### Description of the invention

According to the present invention, a soundproof composite engine cover is made, provided with innovative characteristics and produced through a method according to claim 1, which allows optimizing the industrial production.

Said composite cover is constituted by a shell made of thermoplastic material and at least by one insulating foam placed within said shell according to a configuration dependent on the type of engine for which the cover was designed. The materials used are polyamide or polypropylene as thermoplastic material and a mixture of polyol, isocyanate and CO₂, commonly known with the name "pur" as foam. This selection of materials allows the advantage of considerably reducing the thickness of the cover with respect to the currently known techniques.

Advantageously said foam can be suitably mixed in order to also be fireproof.

The present invention makes use of new and innovative machinery which advantageously allows the management of at least two simultaneous production cycles, considerably quickening the production.

The machinery consists of a multiple mold, provided with at least two cells, each of which provided with a male element and with a female element. Said cells are suitable to take, advantageously in a simultaneous and reversible manner, a first closed configuration or a second open configuration, depending on the current production step.

Advantageously, the first cell, at said female element, is provided with a channel which enables the introduction of the thermoplastic material stored in a hot chamber.

Advantageously, when said multiple mold is situated in said first closed configuration, the male elements and the female elements of each cell are configured for generating the interspaces having the shape of the shell made of thermoplastic material (first cell) and the shape of the thermoplastic material plus the insulating foam (second cell).

Said multi-step method requires at least four steps in order to create a finished product and it is developed as follows:
(A) Injection: in which said multiple mold is situated in said first closed configuration and, by means of said channel, a predetermined amount of thermoplastic material is injected into the interspace of said first cell.
(B) Transfer: in which, after the necessary time for cooling said thermoplastic material, said multiple mold is opened and the solidified thermoplastic material is moved from said first cell to said second cell.
(C) Foaming: in which said multiple mold is once again closed, and a predetermined amount of insulating foam is inserted into the second cell. Advantageously, in order to facilitate the expansion of the insulating foam, the configuration of said second cell is such that the solidified thermoplastic material is arranged with a tilt comprised between 20° and 60°, preferably 45°, with respect to the vertical. Simultaneously and advantageously, a new production cycle starts in said first cell by means of an injection step (A) as previously described.
(D) Extraction: in which, after a predetermined period of time starting from the end of said foaming step (C), said multiple mold is once again opened to extract the finished product and to carry out the transfer step (B) for the solidified thermoplastic material, result of the second production cycle underway.

Advantageously, said male element of said second cell is provided with at least one punch, preferably metallic, adapted to contain the insulating foam during its expansion and solidification which occur during said foaming step (C).

Still in said foaming step (C), in an even more advantageous embodiment of the present invention, a predetermined amount of gas is introduced within the mixture of the insulating foam. This passage has the object of quickening the solidification of said insulating foam. More in detail, an analytical scale connected to a gas tank is adapted to release said predetermined amount of gas within the mixture of the insulating foam through an introduction channel regulated by a valve. The gas is preferably constituted by carbon dioxide CO₂ or, still more preferably, by nitrogen N₂.

Advantageously, in addition, said multi-step method for producing a soundproof composite cover for internal combustion engines can comprise additional steps aimed to provide a more complex finished product according to a specific design. Said steps can consist of:
- a step of spraying any one detaching material available on the market at least on the internal surfaces of said cells;
- a step of inserting a solid flexible panel, preferably made of aluminum, suitable to serve as a heat shield or protection, between said transfer step (B) and said foaming step (C);
- a flaming step, between said transfer step (B) and said foaming step (C), which allows the perfect adherence between the solidified thermoplastic material and the insulating foam by activating the contact surface. It should be specified that this step has proven particularly useful if the thermoplastic material constituting the cover is polypropylene.

In a more complex and advantageous embodiment, moreover, said multiple mold can be provided with one or more further cells, also provided with the corresponding male element and the corresponding female element, and these too being suitable to take, reversibly and simultaneously with the other cells, a first closed configuration and a second open configuration.

It is advantageously possible, moreover, to configure the multiple mold as is more convenient within the production plant, both for logistical and for production motives. In particular, the cells of the multiple mold can be stacked one on the other, one beside the other or mutually remotely positioned.

The advantages offered by the present invention are evident in light of the description described up to now and will be even clearer due to the enclosed figures and to the relative detailed description.

The production method, in a more general vision of the industrial process, advantageously enables a considerable reduction of the production costs, not requiring any post-production step to be carried out piece-by-piece by a specialized operator. Therefore, nearly all of the assembly operations and relative costs are eliminated, the internal movements of the product are eliminated and the engine cover is thinner and more durable than the covers produced with the known techniques.

### Description of the figures

The invention will be described hereinbelow in at least one preferred embodiment, as a non-limiting example and with the aid of the enclosed figures in which:

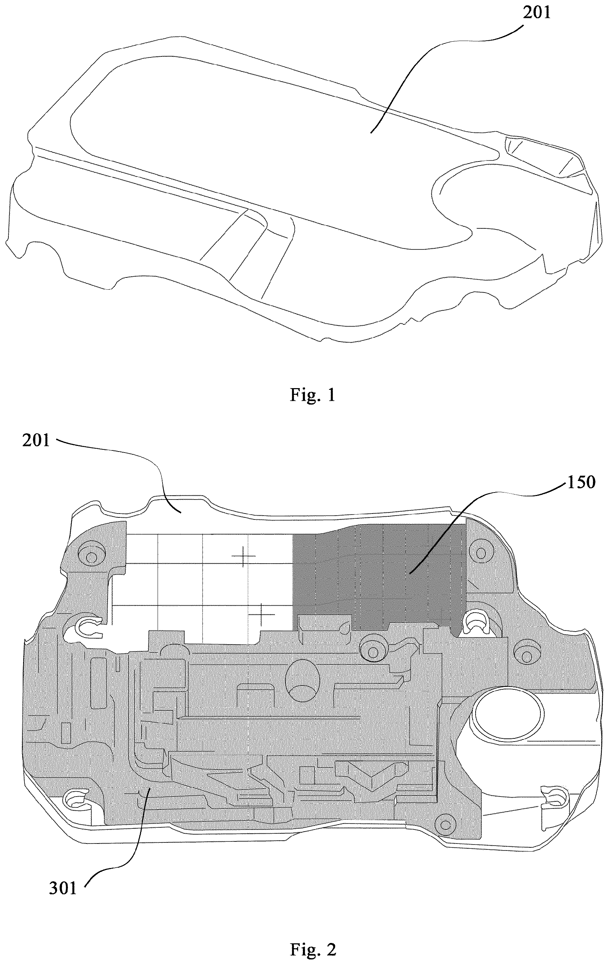

- FIGURE 1 shows a three-dimensional view of one of the possible composite covers made according to the present invention; in this case, this is the cover of a car engine. FIG. 1 represents the external side of the cover which is constituted by the solidified thermoplastic material 201.
- FIGURE 2 illustrates the opposite side of the cover represented in the preceding FIG. 1: this is the side in contact with the engine and hence that which requires expedients for soundproofing and insulation. With the light gray coloring, the portion occupied by the solidified insulating foam 301 is in fact represented, while the dark gray coloring depicts a solid flexible panel 150 which can be useful in some specific embodiments as heat shield or protection.

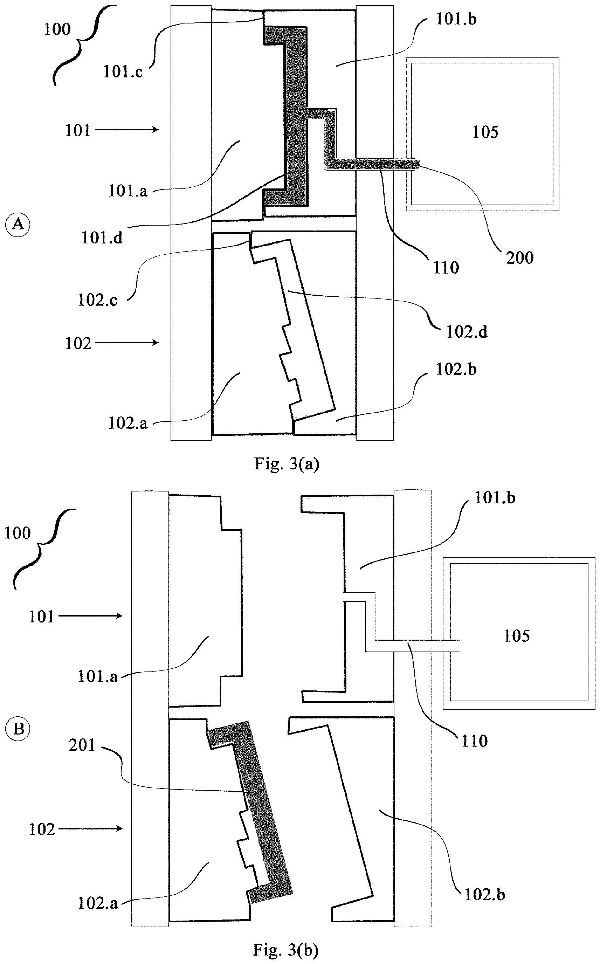

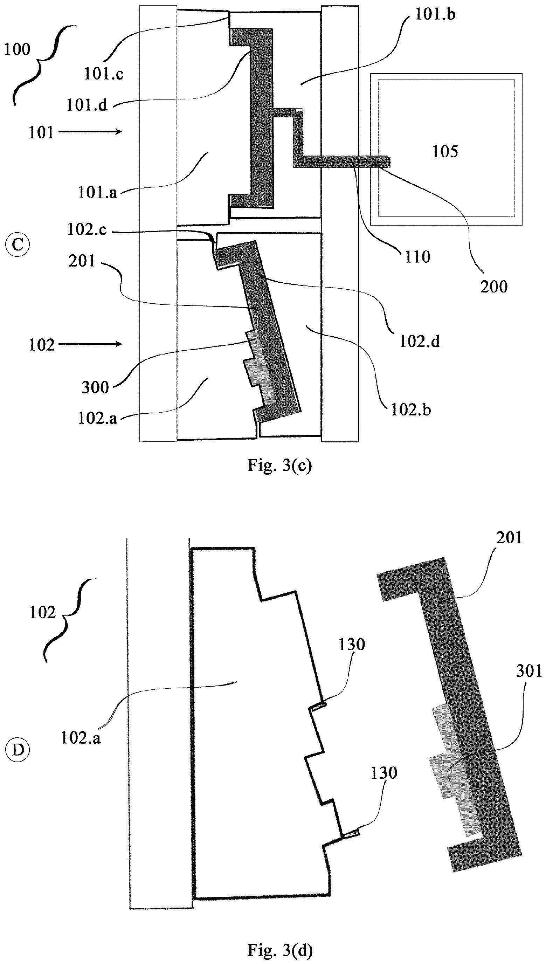

- FIGURE 3 shows the steps of production of the composite cover previously illustrated in FIGS. 1 and 2; in particular FIG. 3(a) shows the injection step A in which the multiple mold 100 is closed and the injection into the first cell 101 occurs; FIG. 3(a) shows the contact areas 101.c-102.c and the interspaces 101.d-102.d formed by the male element 101.a-102.a and by the female element 101.b-102.b of each cell 101-102; FIG. 3(b) shows the step B in which the multiple mold 100 is open and the element made of solidified thermoplastic material 201 is transferred to the second cell 102; FIG. 3(c) illustrates the foaming step C in which the insulating foam 300 is injected and made to expand in the interspace 102.d in the second cell 102, while a new injection step A starts in the first cell; FIG. 3(d), finally, shows a zoom on the male element 102.a of the second cell 102 from which the finished product is extracted (extraction step D). It is also possible to observe punches 130 in FIG. 3(d), which prevent the outflow of the insulating foam 300 before it becomes solidified insulating foam 301.

### Detailed description of the invention

The present invention will now be illustrated as a merely non-limiting or non-constraining example, with reference to the figures which illustrate several embodiments relative to the present inventive concept.

With reference to FIG. 1 and FIG. 2, the two main views are shown of the object obtained by the multistep production method described by the present patent. This is the composite cover of a common car engine. It is constituted by a rigid shell, made of solidified thermoplastic material 201, and by an underlying layer of sound insulation made of solidified insulating foam 301. Depending on the embodiment, the composite cover can also be provided with any one solid flexible panel 150 which acts as heat shield or protection .

Preferably, the materials used in making the composite cover for an internal combustion engine, object of the present invention, are: polypropylene or, still more preferably, polyamide as thermoplastic material 200 and the "pur" as insulating foam 300. The foam commonly known with the name "pur" is constituted by a suitably metered mixture of polyol, isocyanate and carbon dioxide.

In one possible embodiment, additionally, the insulating foam 200 also has fireproof function.

The selection of the abovementioned materials is given from the fact that, by means of their use and by means of the use of the production method described in detail hereinbelow, the thickness of the composite cover can be considerably reduced with respect to that done up to now.

The production makes use of an innovative machinery, whose operation is illustrated in FIGS. 3(a), 3(b), 3(c) and 3(d), i.e. of a multiple mold 100. It is provided with a first cell 101 and with at least one second cell 102, each of which made up of a male element 101.a-102.a and a female element 101.b-102.b. In other embodiments it is possible to make a multiple mold 100, according to the present invention, provided with at least one further cell or with a plurality of further cells, also provided with a male element and with a female element with operation analogous to that described below.

Said multiple mold 100, depending on the production step in which it is situated, is adapted to take, in a reversible manner, a first closed configuration and a second open configuration. Said first closed configuration is characterized in that said male elements 101.a-102.a and said female elements 101.b-102.b are partially in contact with each other by means of the respective contact areas 101.c-102.c, respectively defining a first interspace 101.d suitable to be filled with the thermoplastic material 200 and a second interspace 102.d suitable to be filled with the solidified thermoplastic material 201 and with the insulating foam 300.

As an alternative to said first closed configuration, depending on the production step, said multiple mold 100 can reversibly take a second open configuration, characterized in that said male elements 101.a-102.a and said female elements 102.a-102.b of both said cells 101-102, are mutually spaced by a predetermined distance adapted to allow the extraction of the finished product from said multiple mold 100.

In other possible configurations of the present invention, not represented in the enclosed figures but in any case falling within the protective scope offered by the present patent, said cells 101, 102, ... of said multiple mold 100 can be arranged in a vertically stacked configuration, in which the cells 101, 102, ... are arranged one on the other, or in a lined up configuration, in which the cells 101, 102, ... are arranged in horizontal sequence one beside the other, or in a configuration in which the cells 101, 102, ... are mutually remotely positioned.

The multi-step method, object of the present invention, schematically depicted in FIGS. 3(a), 3(b), 3(c) and 3(d), is developed in cycles of at least four steps and, due to the above-described multiple mold 100, it is capable of managing at least two cycles simultaneously, with clear advantages in terms of production times and costs.

Said steps consist of:
(A) Injection step, in which said multiple mold 100 is situated in said first closed configuration and, by means of said channel 110 arranged at said female element 101.b of said first cell 101, a predetermined amount of thermoplastic material 200 is injected from the hot chamber 105 in which it is stored to said interspace 101.d of said first cell 101.
(B) Transfer step: in which, after a predetermined period of time, preferably 60 seconds, starting from the end of said injection step (A), said thermoplastic material 200 cools and becomes a solidified thermoplastic material 201; at this point, said multiple mold 100 takes said second open configuration and the solidified thermoplastic material 201 is extracted from said first cell 101 and arranged in said second cell 102. Such operation can be carried out by an assigned operator or in a mechanized manner.
(C) Foaming step: in which said multiple mold 100 once again takes said closed configuration and, while a second production cycle initiates in said first cell 101, starting from the injection step (A), a predetermined amount of insulating foam 300 is injected into said second cell 102 in the interspace 102.d portion remaining between said solidified thermoplastic material 201 and said male element 102.a. It is observed that, in order to ensure a expansion and solidification of the insulating foam 300, it is necessary that said second cell 102 be configured in a manner such that the solidified thermoplastic material 201 is tilted, preferably at 45° or in any case with a tilt comprised between 20° and 60° with respect to the vertical axis. Possibly, during said foaming step C, an analytical scale connected to a gas tank is adapted to release a predetermined and stoichiometric amount of a specific gas within the mixture of the insulating foam 300 through an introduction channel regulated by a valve. The gas is preferably constituted by carbon dioxide CO₂ or, still more preferably, by nitrogen N₂. The presence of this gas allows quickening the solidification of the insulating foam 300. The time necessary for the solidification of the insulating foam 300, with the presence of said gas, could be reduced from 3 minutes to 1 minute, approximately.
(D) Extraction step: after a predetermined period of time starting from the end of said foaming step (C), said insulating foam 300 cools and becomes a solidified insulating foam 301; at this point, said multiple mold 100 once again takes said open configuration and, while the finished product or the composite cover is extracted from said second cell 102, the solidified thermoplastic material 201 of the second production cycle is moved from said first cell 101 into said second cell 102 in a new transfer step (B).

With reference to FIG. 3(d), which consists of a more detailed view of the second cell 102 with respect to the preceding figures, it can be observed that said male element 102.a at least of said second cell 102 of the multiple mold 100 is provided with at least one punch 130, preferably metallic, so as to make the cell hermetic when said multiple mold 100 is situated in said first closed configuration, so as to contain the insulating foam 300 during its expansion and solidification, between said foaming step (C) and said extraction step (D). Finally, based on the characteristics required by the specific composite cover to be produced according to the present invention, additional steps can be inserted in the production cycle. One of these could be a step of spraying any one release agent at least on the internal surfaces of said cells 101-102. Such further step could be particularly useful if a sandwichlike structure is provided for the composite cover (FIG. 4).

Still in a possible additional step between the transfer step (B) and the foaming step (C), said solid flexible panel 150 can be inserted which is preferably made of aluminum and suitable to serve as a heat shield or protection (visible in FIG. 2).

Finally, if the thermoplastic material 200 is constituted by polypropylene, in some cases it could be useful and preferable to carry out a flaming step, between said transfer step (B) and said foaming step (C), which allows the perfect adherence between the solidified thermoplastic material 201 and the insulating foam 300 by activating the contact surface.

## Claims

1. Multi-step method for producing a soundproof composite cover for internal combustion engines, suitable to produce a composite cover made of thermoplastic material (200) and insulating foam (300) with a predetermined shape so as to enable the complete covering and desired sound insulation of the aforementioned engine; said method making use of a multiple mold (100) made up of a first cell (101), provided with a male element (101.a) and a female element (101.b), and at least one second cell (102), provided with a male element (102.a) and a female element (102.b), said first and said at least one second cell (101, 102) being suitable to take, in a simultaneous and reversible manner, a first closed configuration wherein said male elements (101.a, 102.a) and said female elements (101.b, 102.b) are partly in contact with each other, respectively through a first contact area (101.c) and a second contact area (102.c), so as to respectively define a first interspace (101.d) suitable to be filled with the thermoplastic material (200) and at least one second interspace (102.d) suitable to be filled with the solidified thermoplastic material (201) and with the insulating foam (300); said cells (101, 102) of said multiple mold (100) also being suitable to take, in a simultaneous and reversible manner, a second open configuration wherein said male elements (101.a, 102.a) and said female elements (101.b, 102.b) are mutually spaced to enable the extraction of the finished product; said male element (102.a) of said second cell (102) of said multiple mold (100) being **characterized by** at least one punch (130), preferably metallic, suitable to make said second cell (102) hermetic when said multiple mold (100) is in said first closed configuration, so as to contain the insulating foam (300) during the expansion thereof between a foaming step (C) and an extraction step (D); said method also being constituted by the following subsequent step s :
A) Injection step: in said injection step (A) said multiple mold (100) is in said first closed configuration and, through a channel (110) arranged at said female element (101.b) of said first cell (101), a predetermined amount of thermoplastic material (200) is injected from a hot chamber (105) to said first interspace (101.d) of said first cell (101);
B) Transfer step: after a predetermined period of time starting from the end of said injection step (A), said thermoplastic material (200) cools and reaches the solid state so as to enable, in said transfer step (B), the opening of said multiple mold (100) in said second open configuration to extract the solidified thermoplastic material (201) from said first cell (101) and position it in said second interspace (102.d) of said second cell (102);
C) Foaming step: in said foaming step (C) said multiple mold (100) is closed and once again takes said first closed configuration and, while a new injection process (A) occurs in said first cell (101), a predetermined amount of insulating foam (300) is injected into said second cell (102) in the portion of interspace (102.d) present between said solidified thermoplastic material (201) and said male element (102.a), so that, by solidifying, said insulating foam (300) irreversibly adheres to the solidified thermoplastic material (201) with which it comes into contact;
D) Extraction step: after a predetermined period of time starting from the end of said foaming step (C), so as to enable the solidification of said insulating foam (300), said multiple mold (100) is opened and once again takes said second open configuration; in said extraction step (D), the finished product is extracted from said second cell (102), and simultaneously the solidified thermoplastic material (201) is extracted from said first cell (101) and arranged in said second cell (102) thus leading to a new transfer step (B).

2. Multi-step method for producing a soundproof composite cover for internal combustion engines, according to the preceding claim 1, **characterized in that** said multiple mold (100) is constituted by said first cell (101), provided with said male element (101.a) and said female element (101.b), by said second cell (102), provided with said male element (102.a) and with said female element (102.b), and by at least one further cell, provided with a further male element and with a further female element; said cells (101, 102, ...) being suitable to take, in a simultaneous and reversible manner, a first closed configuration in which said male elements (101.a, 102.a, ...) and said female elements (101.b, 102.b, ...) are partly in mutual contact, through the respective contact areas (101.c, 102.c, ...), so as to define the respective interspaces (101.d, 102.d, ...) suitable to be filled with the thermoplastic material (200), with the insulating foam (300) and with further components of said composite cover; said cells (101, 102, ...) of said multiple mold (100) also being suitable to take, in a simultaneous and reversible manner, a second open configuration wherein said male elements (101.a, 102.a, ...) and said female elements (101.b, 102.b, ...) are mutually spaced to enable the extraction of the finished product or finished products.

3. Multi-step method for producing a soundproof composite cover for internal combustion engines, according to the preceding claim 1 or 2, **characterized in that,** during said foaming step (C) a predetermined amount of a gas suitable to quicken the solidification of said insulating foam (300) is mixed with said insulating foam (300); said gas preferably being constituted by carbon dioxide (CO₂) or, even more preferably, by nitrogen (N₂); said predetermined amount of said gas being controlled by a special preset analytical scale suitable to control the amount of said gas introduced into the mixture of said insulating foam (300).

4. Multi-step method for producing a soundproof composite cover for internal combustion engines, according to any one of the preceding claims, **characterized in that** said second cell (102) has a tilt with respect to the vertical axis comprised between 20° and 60°, preferably 45°.

5. Multi-step method for producing a soundproof composite cover for internal combustion engines, according to any one of the preceding claims, **characterized in that** said cells (101, 102, ...) of said multiple mold (100) can be arranged in a vertically stacked configuration, wherein the cells (101, 102, ...) are arranged one on the other, or in a lined up configuration, wherein the cells (101, 102, ...) are arranged in horizontal sequence, one beside the other, or in a configuration wherein the cells (101, 102, ...) are mutually remotely positioned.

6. Multi-step method for producing a soundproof composite cover for internal combustion engines, according to any one of the preceding claims, **characterized in that** it comprises at least one step of spraying any one detaching material available on the market, on the inner surfaces of said cells (101, 102), so as to facilitate the detachment of the solidified thermoplastic material (201) and the finished product respectively from said first cell (101) and from said second cell (102).

7. Multi-step method for producing a soundproof composite cover for internal combustion engines, according to any one of the preceding claims, **characterized in that** it comprises a further step of inserting any one solid flexible panel (150), preferably made of aluminum, arranged in direct contact with the solidified thermoplastic material (201), between said transfer step (B) and said foaming step (C); said solid flexible panel (150) being suitable to serve as a heat shield or protection.

8. Multi-step method for producing a soundproof composite cover for internal combustion engines, according to any one of the preceding claims, **characterized in that** it comprises a flaming step between said transfer step (B) and said foaming step (C); said flaming step being suitable to enable the adherence between said solidified thermoplastic material (201) and said insulating foam (300) by activating the contact surface.

## Patentansprüche

1. Multi-Step-Verfahren zur Herstellung einer schalldichten Verbundabdeckung für Verbrennungsmotoren, geeignet, um eine Verbundabdeckung aus thermoplastischem Material (200) und isolierendem Schaum (300) mit einer vorgegebenen Form herzustellen, um die vollständige Abdeckung und gewünschte Schallisolierung des genannten Motors zu ermöglichen; wobei das Verfahren eine Mehrfachform (100) verwendet, die aus einer ersten Zelle (101), die mit einem männlichen Element (101.a) und einem weiblichen Element (101.b) versehen ist, und zumindest einer zweiten Zelle (102), die mit einem männlichen Element (102.a) und einem weiblichen Element (102.b) versehen ist, besteht, wobei die erste und die zumindest eine zweite Zelle (101, 102) geeignet sind, in einer gleichzeitigen und reversiblen Weise eine erste geschlossene Konfiguration anzunehmen, in der die männlichen Elemente (101.a, 102.a) und die weiblichen Elemente (101.b, 102.b) über einen ersten Kontaktbereich (101.c) bzw. einen zweiten Kontaktbereich (102.c) teilweise miteinander in Kontakt stehen, um einen ersten Zwischenraum (101.d), der dazu geeignet ist, mit dem thermoplastischen Material (200) gefüllt zu werden, und zumindest einen zweiten Zwischenraum (102.d), der dazu geeignet ist, mit dem verfestigten thermoplastischen Material (201) und mit dem isolierenden Schaum (300) gefüllt zu werden, zu definieren; wobei die Zellen (101, 102) der Mehrfachform (100) auch dazu geeignet sind, in einer gleichzeitigen und reversiblen Weise eine zweite offene Konfiguration einzunehmen, in der die männlichen Elemente (101.a, 102.a) und die weiblichen Elemente (101.b, 102.b) voneinander beabstandet sind, um die Entnahme des fertigen Produkts zu ermöglichen; wobei das männliche Element (102.a) der zweiten Zelle (102) der Mehrfachform (100) durch zumindest einen, vorzugsweise metallischen Stempel (130), gekennzeichnet ist, der geeignet ist, die zweite Zelle (102) hermetisch abzudichten, wenn sich die Mehrfachform (100) in der ersten geschlossenen Konfiguration befindet, um den isolierenden Schaum (300) während seiner Ausdehnung zwischen einem Schäumungsschritt (C) und einem Entnahmeschritt (D) zu enthalten; wobei das Verfahren auch durch die folgenden nachfolgenden Schritte gebildet wird:
A) Einspritzschritt: In dem Einspritzschritt (A) befindet sich die Mehrfachform (100) in der ersten geschlossenen Konfiguration, und durch einen Kanal (110), der an dem weiblichen Element (101.b) der ersten Zelle (101) angeordnet ist, wird eine vorgegebene Menge an thermoplastischem Material (200) aus einer heißen Kammer (105) in den ersten Zwischenraum (101.d) der ersten Zelle (101) eingespritzt;
B) Transferschritt: nach einer vorgegebenen Zeitspanne, die mit dem Ende des Einspritzschritts (A) beginnt, kühlt das thermoplastische Material (200) ab und erreicht den festen Zustand, um in dem Transferschritt (B) das Öffnen der Mehrfachform (100) in die zweite offene Konfiguration zu ermöglichen, um das verfestigte thermoplastische Material (201) aus der ersten Zelle (101) zu entnehmen und es in dem zweiten Zwischenraum (102.d) der zweiten Zelle (102) zu positionieren;
C) Schäumungsschritt: in dem Schäumungsschritt (C) wird die Mehrfachform (100) geschlossen und nimmt noch einmal die erste geschlossene Konfiguration an, und während ein neuer Einspritzvorgang (A) in der ersten Zelle (101) stattfindet, wird eine vorgegebene Menge an isolierendem Schaum (300) in die zweite Zelle (102) in den Teil des Zwischenraums (102.d) eingespritzt, der sich zwischen dem verfestigten thermoplastischen Material (201) und dem männlichen Element (102.a) befindet, so dass der isolierende Schaum (300) durch Verfestigen irreversibel an dem verfestigten thermoplastischen Material (201), mit dem er in Kontakt kommt. haftet;
D) Entnahmeschritt: nach einer vorgegebenen Zeitspanne, die mit dem Ende des Schäumungsschritts (C) beginnt, um die Verfestigung des isolierenden Schaums (300) zu ermöglichen, wird die Mehrfachform (100) geöffnet und nimmt noch einmal die zweite offene Konfiguration an; in dem Entnahmeschritt (D) wird das fertige Produkt aus der zweiten Zelle (102) entnommen, und gleichzeitig wird das verfestigte thermoplastische Material (201) aus der ersten Zelle (101) entnommen und in der zweiten Zelle (102) angeordnet, was zu einem neuen Transferschritt (B) führt.

2. Multi-Step-Verfahren zur Herstellung einer schalldichten Verbundabdeckung für Verbrennungsmotoren nach dem vorhergehenden Anspruch 1, **dadurch gekennzeichnet, dass** die Mehrfachform (100) durch die erste Zelle (101), die mit dem männlichen Element (101.a) und dem weiblichen Element (101.b) versehen ist, durch die zweite Zelle (102), die mit dem männlichen Element (102.a) und mit dem weiblichen Element (102.b) versehen ist, und durch zumindest eine weitere Zelle, die mit einem weiteren männlichen Element und mit einem weiteren weiblichen Element versehen ist, gebildet wird; wobei die Zellen (101, 102, ...) geeignet sind, in einer gleichzeitigen und reversiblen Weise eine erste geschlossene Konfiguration einzunehmen, in der die männlichen Elemente (101.a, 102.a, ...) und die weiblichen Elemente (101.b, 102.b, ...) über die jeweiligen Kontaktbereiche (101.c, 102.c, ...) teilweise in gegenseitigem Kontakt stehen, um die jeweiligen Zwischenräume (101.d, 102.d, ...) zu definieren, die mit dem thermoplastischen Material (200), mit dem isolierenden Schaum (300) und mit weiteren Komponenten der Verbundabdeckung gefüllt werden können; wobei die Zellen (101, 102, ....) der Mehrfachform (100) auch dazu geeignet sind, in einer gleichzeitigen und reversiblen Weise eine zweite offene Konfiguration anzunehmen, in der die männlichen Elemente (101.a, 102.a, ...) und die weiblichen Elemente (101.b, 102.b, ...) voneinander beabstandet sind, um die Entnahme des fertigen Produkts oder der fertigen Produkte zu ermöglichen.

3. Multi-Step-Verfahren zur Herstellung einer schalldichten Verbundabdeckung für Verbrennungsmotoren nach dem vorhergehenden Anspruch 1 oder 2, **dadurch gekennzeichnet, dass** während des Schäumungsschritts (C) eine vorgegebene Menge eines Gases, das geeignet ist, die Verfestigung des isolierenden Schaums (300) zu beschleunigen, mit dem isolierenden Schaum (300) gemischt wird; wobei das Gas vorzugsweise durch Kohlendioxid (CO₂) oder noch bevorzugter durch Stickstoff (N₂) gebildet wird; wobei die vorgegebene Menge des Gases durch eine spezielle voreingestellte analytische Skala gesteuert wird, die geeignet ist, die Menge des in die Mischung des isolierenden Schaums (300) eingeführten Gases zu steuern.

4. Multi-Step-Verfahren zur Herstellung einer schalldichten Verbundabdeckung für Verbrennungsmotoren nach einem der vorhergehenden Ansprüche, **dadurch gekennzeichnet, dass** die zweite Zelle (102) in Bezug auf die vertikale Achse eine Neigung, die zwischen 20° und 60°, vorzugsweise 45° beträgt, aufweist.

5. Multi-Step-Verfahren zur Herstellung einer schalldichten Verbundabdeckung für Verbrennungsmotoren nach einem der vorangehenden Ansprüche, **dadurch gekennzeichnet, dass** die Zellen (101, 102, ...) der Mehrfachform (100) in einer vertikal gestapelten Konfiguration, in der die Zellen (101 , 102, ...) übereinander angeordnet sind, oder in einer aufgereihten Konfiguration, in der die Zellen (101 , 102, ...) in horizontaler Reihenfolge nebeneinander angeordnet sind, oder in einer Konfiguration, in der die Zellen (101, 102, ...) voneinander entfernt positioniert sind, angeordnet werden können.

6. Multi-Step-Verfahren zur Herstellung einer schalldichten Verbundabdeckung für Verbrennungsmotoren nach einem der vorhergehenden Ansprüche, **dadurch gekennzeichnet, dass** es zumindest einen Schritt des Aufsprühens eines beliebiges auf dem Markt erhältlichen Ablösematerials auf die inneren Oberflächen der Zellen (101, 102) aufweist, um das Ablösen des verfestigten thermoplastischen Materials (201) und des Endprodukts von der ersten Zelle (101) bzw. von der zweiten Zelle (102) zu erleichtern.

7. Multi-Step-Verfahren zur Herstellung einer schalldichten Verbundabdeckung für Verbrennungsmotoren nach einem der vorhergehenden Ansprüche, **dadurch gekennzeichnet, dass** es einen weiteren Schritt des Einfügens eines festen, flexiblen Panels (150), vorzugsweise aus Aluminium, das in direktem Kontakt mit dem verfestigten thermoplastischen Material (201) angeordnet ist, zwischen dem Transferschritt (B) und dem Schäumungsschritt (C) aufweist; wobei das feste, flexible Panel (150) geeignet ist, als Hitzeschild oder -schutz zu dienen.

8. Multi-Step-Verfahren zur Herstellung einer schalldichten Verbundabdeckung für Verbrennungsmotoren nach einem der vorhergehenden Ansprüche, **dadurch gekennzeichnet, dass** es einen Flammschritt zwischen dem Transferschritt (B) und dem Schäumungsschritt (C) aufweist; wobei der Flammschritt geeignet ist, die Haftung zwischen dem verfestigten thermoplastischen Material (201) und dem isolierenden Schaum (300) durch Aktivieren der Kontaktoberfläche zu ermöglichen.

## Revendications

1. Procédé multi-étapes pour produire une couverture composite insonore pour moteurs à combustion interne, adapté pour produire une couverture composite faite de matériau thermoplastique (200) et de mousse isolante (300) avec une forme prédéterminée de manière à permettre le recouvrement complet et une isolation sonore souhaitée du moteur susmentionné ; ledit procédé faisant usage d'un moule multiple (100) composé d'une première cellule (101), pourvue d'un élément mâle (101.a) et d'un élément femelle (101.b), et d'au moins une deuxième cellule (102), pourvue d'un élément mâle (102.a) et d'un élément femelle (102.b), lesdites première et au moins une deuxième cellules (101, 102) étant propres à adopter, de manière simultanée et réversible, une première configuration fermée dans laquelle lesdits éléments mâles (101.a, 102.a) et lesdits éléments femelles (101.b, 102.b) sont partiellement en contact les uns avec les autres, respectivement par une première zone de contact (101.c) et une deuxième zone de contact (102.c), de manière à définir respectivement un premier espacement (101.d) apte à être rempli avec le matériau thermoplastique (200) et au moins un deuxième espacement (102.d) apte à être rempli avec le matériau thermoplastique solidifié (201) et avec la mousse isolante (300) ; lesdites cellules (101, 102) dudit moule multiple (100) étant également propres à adopter, de manière simultanée et réversible, une deuxième configuration ouverte dans laquelle lesdits éléments mâles (101.a, 102.a) et lesdits éléments femelles (101.b, 102.b) sont mutuellement espacés pour permettre l'extraction du produit fini ; ledit élément mâle (102.a) de ladite deuxième cellule (102) dudit moule multiple (100) étant **caractérisé par** au moins un poinçon (130), de préférence métallique, propre à rendre la deuxième cellule (102) hermétique quand ledit moule multiple (100) est dans ladite première configuration fermée, de manière à contenir la mousse isolante (300) pendant l'expansion de celle-ci entre une étape de moussage (C) et une étape d'extraction (D), ledit procédé étant également constitué par les étapes postérieures suivantes :
A) Etape d'injection : dans ladite étape d'injection (A), ledit moule multiple (100) est dans ladite première configuration fermée et, à travers un canal (110) disposé sur ledit élément femelle (101.b) de la première cellule (101, une quantité prédéterminée de matériau thermoplastique (200) est injectée depuis une chambre chaude (105) dans ledit premier espacement (101.d) de ladite première cellule (101) ;
B) Etape de transfert : après une période de temps prédéterminée partant de la fin de ladite étape d'injection (A), ledit matériau thermoplastique (200) refroidit et atteint l'état solide de manière à permettre, dans ladite étape de transfert (B), l'ouverture dudit moule multiple (100) dans ladite deuxième configuration ouverte pour extraire de ladite première cellule (101) le matériau thermoplastique solidifié (201) et le positionner dans ledit deuxième espacement (102.d) de ladite deuxième cellule (102) ;
C) Etape de moussage : dans ladite étape de moussage (C), ledit moule multiple (100) est fermé et adopte une fois encore ladite première configuration fermée et, pendant qu'un nouveau traitement d'injection (A) a lieu dans ladite première cellule (101), une quantité prédéterminée de mousse isolante (300) est injectée dans ladite deuxième cellule (102) dans la partie d'espacement (102.d) présente entre ledit matériau thermoplastique solidifié (201) et ledit élément mâle (102.a), de sorte que, en solidifiant, ladite mousse isolante (300) adhère de manière irréversible au matériau thermoplastique solidifié (201) avec lequel elle vient en contact ;
D) Etape d'extraction : après une période de temps prédéterminée partant de la fin de ladite étape de moussage (C), de manière à permettre la solidification de ladite mousse isolante (300), ledit moule multiple (100) est ouvert et adopte une fois encore ladite deuxième configuration ouverte ; dans ladite étape d'extraction (D), le produit fini est extrait de ladite deuxième cellule (102), et simultanément le matériau thermoplastique solidifié (201) est extrait de ladite première cellule (101) et disposé dans ladite deuxième cellule (102), menant ainsi à une nouvelle étape de transfert (B).

2. Procédé multi-étapes pour produire une couverture composite insonore pour moteurs à combustion interne, selon la revendication 1 précédente, **caractérisé en ce que** ledit moule multiple (100) est constitué par ladite première cellule (101), pourvue dudit élément mâle (101.a) et dudit élément femelle (101.b), par ladite deuxième cellule (102), pourvue dudit élément mâle (102.a) et dudit élément femelle (102.b), et par au moins une autre cellule, pourvue d'un autre élément mâle et d'un autre élément femelle ; lesdites cellules (101, 102, ...) étant propres à adopter, de manière simultanée et réversible, une première configuration fermée dans laquelle lesdits éléments mâles (101.a, 102.a, ...) et lesdits éléments femelles (101.b, 102.b, ...) sont en partie en contact mutuel, par les zones de contact (101.c, 102.c, ...) respectives, de manière à définir les espacements (101.d, 102.d, ...) respectifs propres à être remplis avec le matériau thermoplastique (200), avec la mousse isolante (300) et avec d'autres composants dudit composant composite; lesdites cellules (101, 102, ...) dudit moule multiple (100) étant également propres à adopter, de manière simultanée et réversible, une deuxième configuration ouverte dans laquelle lesdits éléments mâles (101.a, 102.a, ...) et lesdits éléments femelles (101.b, 102.b, ...) sont mutuellement espacés pour permettre l'extraction du produit fini ou des produits finis.

3. Procédé multi-étapes pour produire une couverture composite insonore pour moteurs à combustion interne, selon la revendication 1 ou 2 précédente, **caractérisé en ce que** pendant ladite étape de moussage (C), une quantité prédéterminée d'un gaz propre à accélérer la solidification de ladite mousse isolante (300) est mélangée avec ladite mousse isolante (300) ; ledit gaz étant de préférence constitué par du dioxyde de carbone (CO₂) ou, de manière plus préférée, par de l'azote (N₂) ; ladite quantité prédéterminée dudit gaz étant commandée par une échelle analytique préréglée spéciale propre à commander la quantité dudit gaz introduite dans le mélange de ladite mousse isolante (300).

4. Procédé multi-étapes pour produire une couverture composite insonore pour moteurs à combustion interne, selon l'une quelconque des revendications précédentes, **caractérisé en ce que** ladite deuxième cellule (102) a une inclinaison par rapport à l'axe vertical comprise entre 20° et 60°, de préférence 45°.

5. Procédé multi-étapes pour produire une couverture composite insonore pour moteurs à combustion interne, selon l'une quelconque des revendications précédentes, **caractérisé en ce que** lesdites cellules (101, 102, ...) dudit moule multiple (100) peuvent être disposées dans une configuration empilée verticalement, dans laquelle les cellules (101, 102, ...) sont disposées les unes sur les autres, ou dans une configuration alignée, dans laquelle les cellules (101, 102, ...) sont disposées en une séquence horizontale, côte à côte, ou dans une configuration dans laquelle les cellules (101, 102, ...) sont positionnées mutuellement à distance.

6. Procédé multi-étapes pour produire une couverture composite insonore pour moteurs à combustion interne, selon l'une quelconque des revendications précédentes, **caractérisé en ce qu'il** comprend au moins une étape de vaporisation d'un matériau de détachement quelconque disponible sur le marché, sur les surfaces intérieures desdites cellules (101, 102), de manière à faciliter le détachement du matériau thermoplastique solidifié (201) et du produit fini, respectivement de ladite première cellule (101) et de ladite deuxième cellule (102).

7. Procédé multi-étapes pour produire une couverture composite insonore pour moteurs à combustion interne, selon l'une quelconque des revendications précédentes, **caractérisé en ce qu'il** comprend une autre étape d'insertion d'un panneau flexible solide (150) quelconque, fait de préférence d'aluminium, disposé en contact direct avec le matériau thermoplastique solidifié (201), entre ladite étape de transfert (B) et ladite étape de moussage (C) ; ledit panneau flexible solide (150) étant propre à servir d'écran ou de protection thermiques.

8. Procédé multi-étapes pour produire une couverture composite insonore pour moteurs à combustion interne, selon l'une quelconque des revendications précédentes, **caractérisé en ce qu'il** comprend une étape de flambage entre ladite étape de transfert (B) et ladite étape de moussage (C) ; ladite étape de flambage étant adaptée pour permettre l'adhérence entre le matériau thermoplastique solidifié (201) et ladite mousse isolante (300) en activant la surface de contact.
